# EUROPEAN PATENT APPLICATION

(11) **EP 3 738 883 A1**
(43) Date of publication of application: **18.11.2020**
(21) Application number: 19382383.8
(22) Date of filing: 16.05.2019
(51) Int. Cl.: B64D 15/12, H01B 1/04, H05B 3/14, H05B 3/16

(54) **RESISTIVE HEATED AIRCRAFT COMPONENT AND METHOD FOR MANUFACTURING SAID AIRCRAFT COMPONENT**

(71) Applicant: Airbus Operations, S.L.U., 28906 Getafe (Madrid) (ES); Airbus Defence and Space GmbH, 82024 Taufkirchen (DE)
(72) Inventor: BLANCO VARELA, Tamara, 28906 Getafe (ES); MARTÍN MORENO, Zulima, 28906 Getafe (ES); BUTRAGUEÑO MARTÍNEZ, Asunción, 28906 Getafe (ES); SÁNCHEZ HUERTAS, Guillermo, 28906 Getafe (ES); ADRIÁN AROCHA, Luis Gabriel, 28906 Getafe (ES); BONNACURSO, Elmar, 82024 Taufkirchen (DE)
(74) Representative: Elzaburu S.L.P.

(57) **Abstract**

Resistive heated aircraft component, comprising a fiber reinforced polymer surface (5) and further comprising:
• a graphene paper (1) having first and second opposite faces,
• a pair of electrodes (2) connected to the graphene paper (1), the graphene paper (1) and the pair of electrodes (2) being configured to conduct an electrical current such that the graphene paper (1) produces heat,
• the second face of the graphene paper (1) located towards the fiber reinforced polymer surface (5) of the aircraft, and
• a protective layer (3) located on the first face of the graphene paper (1).

## Description

### FIELD OF THE INVENTION

The invention relates to a thermo-electrical component of an aircraft which is based on a graphene paper. In particular, the invention relates to an ice protection system for an aircraft, ensuring anti-icing and/or de-icing of an aircraft component.

### BACKGROUND OF THE INVENTION

Mostly known Ice Protection Systems for aircrafts are bleed-air-based systems comprising small piccolo titanium tubes through which hot air circulates. These systems have a high number of drawbacks, for instance, their weight and complexity. These systems also have other problems like high power consumption and low efficiency.

Additionally, thermo-electrical anti-icing systems mainly based on metallic circuits or elements are mainly used in windshields, propellers..., however, they are also paving its way into aircraft structure industry. This known systems use resistive circuits to generate heat when an electrical current is applied by Joule effect, which correlates the heat generated and the dissipation of kinetic energy of electrons flowing through a conductor material.

Currently, the following components of an aircraft are protected against the formation or accumulation of ice:
- Inner and outer wing leading edges, for natural laminar flow (NLF) wings.
- Engine inlets, nacelle lips, pylon struts, ...

To the contrary, the following components of an aircraft are not currently protected against ice accreation:
- HTP / VTP leading edges.
- Wing tips / winglets / sharklets.
- RAT (ram air turbine) release mechanism.
- Contra rotating open rotor engine (CROR).

For next generation aircraft, in components like wings, empennage, rotorblades, antennae, windshield, new compatible and flexible ice protection technologies are urgently needed, compatible with composites, more electrical aircrafts, providing lighter and simpler systems and environmental drivers and also flexible to be adapted to complex shapes and curvatures of the different components.

### SUMMARY OF THE INVENTION

The invention encompasses an aircraft component comprising a fiber reinforced polymer surface and a resistive heater mainly for thermo-electrical ice protection applications. The resistive heater is based on a graphene paper which is a sheet fabricated from graphite or graphene or graphite oxyde or graphene oxyde flakes. The resistive heated aircraft component comprises the fiber reinforced polymer surface and:
- a graphene paper having first and second opposite faces,
- a pair of electrodes connected to the graphene paper, the graphene paper and the pair of electrodes being configured to conduct an electrical current such that the graphene paper produces heat,
- the second face of the graphene paper located towards the fiber reinforced polymer surface of the aircraft, and
- a protective layer located on the first face of the graphene paper.

Said protective layer, which comprises in an embodiment of a polymer film, both protects the surface of the graphene paper and collaborates in the adhesion of the graphene paper to the surface of the fiber reinforced polymer component.

The resistive heater object of the invention is located directly over the fiber reinforced polymer surface of the aircraft which allows better conductive solutions and anti-icing and de-icing properties.

The fiber reinforced polymer surface may be a carbon fiber reinforced polymer or a glass fiber reinforced polymer or even other kind of fiber.

The electrodes may be electrical metallic connections having good behavior against corrosion, i.e, chemical stability.

Although the main application of the resistive heated component object of the invention is de-icing and/or anti-icing aircraft parts, other applications which also require a heating element are possible, for instance, for heating batteries in aircraft applications.

It is also an object of the present invention a method for manufacturing an aircraft component comprising a resistive heater, the method comprising the following steps:
- providing a graphene paper having first and second opposite faces,
- providing a pair of electrodes,
- connecting the pair of electrodes to the graphene paper so that the graphene paper and the pair of electrodes are configured to conduct an electrical current such that the graphene paper produces heat,
- providing a protective layer,
- locating the protective layer on the first face of the graphene paper,
- providing an aircraft component comprising a fiber reinforced polymer surface,
- joining the graphene paper and the protective layer to the fiber reinforced polymer surface, the second face of the graphene paper located towards the fiber reinforced polymer surface.

It is also an object of the present invention an ice protection system for an aircraft and an aircraft comprising the resistive heated aircraft component previously mentioned.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a schematic perspective view of an embodiment of the aircraft component object of the invention.
Figure 2 shows a schematic perspective view of a second embodiment of the aircraft component object of the invention.
Figure 3 shows a planar view of a first embodiment of a graphene paper according to the invention.

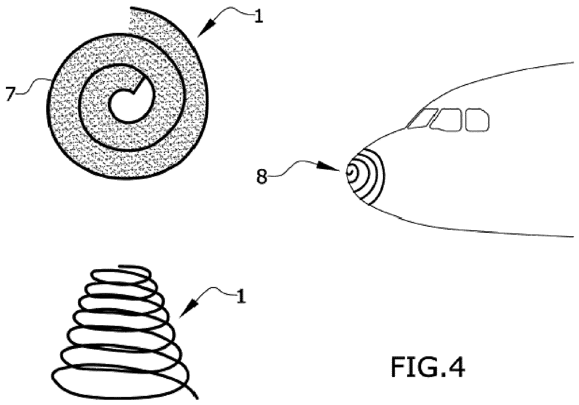

Figure 4 shows a planar view and a perspective view of a second embodiment of a graphene paper according to the invention and a schematic lateral view of an aircraft nose comprising said second embodiment.
Figure 5 shows a planar view of a third embodiment of a graphene paper according to the invention and a schematic lateral section of an aircraft leading edge.

### DETAILED DESCRIPTION OF THE INVENTION

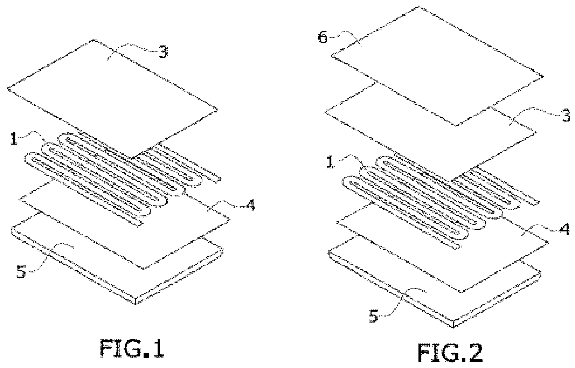

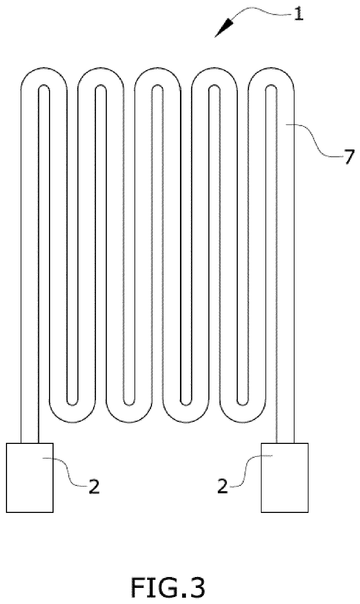

Figure 1 discloses a first embodiment of a resistive heated aircraft component, specifically an ice-protected aircraft component comprising a carbon fiber reinforced polymer component having a surface (5) and an ice protection system comprising:
- a graphene paper (1) having two opposite faces,
- a pair of electrodes (2) connected to the graphene paper (1), as can be seen in figure 3,
- a protective layer (3) located on one of the faces of the graphene paper (1), and additionally
- an insulating layer (4) located between the graphene paper (1) and the carbon fiber reinforced polymer surface (5).

In case of carbon fiber reinforced polymer an insulating layer (4) in-between the reinforced polymer surface (5) and the graphene paper (1) is advisable, for instance, comprising a polymer film. In an embodiment, the polymer film comprises an adhesive thermoset or a thermoplastic polymer or a glass fiber reinforced polymer, for instance, a prepreg. When the component is made of glass fiber, an insulating layer (4) between the graphene paper (1) and the polymer surface (5) is not required as the insulating layer (4) prevents the electrical current flow through the carbon fiber reinforced laminate causing short-cirucit issues.

Figure 2 discloses another embodiment in which a thermally conductive anti-erosion layer (6) is added over the protective layer (3). Although the protective layer (3) partially protects the graphene paper (1), as the resistive heater is located over the surface (5) of the component and not buried into the component and thus directly exposed to the erosion produced by sand and rain during operatibility, to protect it against them, an anti-erosion layer (6) may be added. The thermally conductive anti-erosion layer (6) comprises a thermally conductive polyurethane foil or a metallic foil, for instance, a stainless steel foil.

The thickness of the graphene paper (1) is between 30 µm and 70 µm, preferably 50 µm, which ensures both a flexible paper (1) and good heating features.

Preferably, the graphene paper (1) is made of stacked graphene platelets. Specifically, it can be made of exfoliated graphene and/or pristine graphene, functionalized or oxydized graphene or non-functionalized graphene.

The graphene paper (1) may have a rectangular shape or may comprise a ribbon (7) having a continuous serpentine shape as disclosed in figures 1 to 3. The advantage of the ribbons (7) is that there is no lenght limitations. The width of the ribbon (7) ranges from 2 mm to 100 mm.

One of the advantages of the invention is that the graphene paper (1) may be cut into different shapes in order to allow the adaptation of the resistive heater to aircraft components with different complex curvatures and shapes that increases the flexibility of the applications, like two dimension curvatures, noses (8) or inlets that are applications that traditionally where unable to be covered with resistive heaters due to shape constraints.

The graphene paper (1) of the invention has the advantage that it may be cut into different shapes, as for instance, a serpentine, spiral, mesh or straight lines shape. It allows to easily adapt the resistive heater to intricated two and three dimensions aircraft components. For instance, noses (8) can be provided with the spiral shape or leading edges with the serpentine shape while at the same time an optimal spreading of heat over the reinforced polymer surface (5) is achieved. The spiral shape may be easily adapted to semi-spherical or conical shapes, while this cut saves graphene paper, reducing the costs of the graphene paper employed.

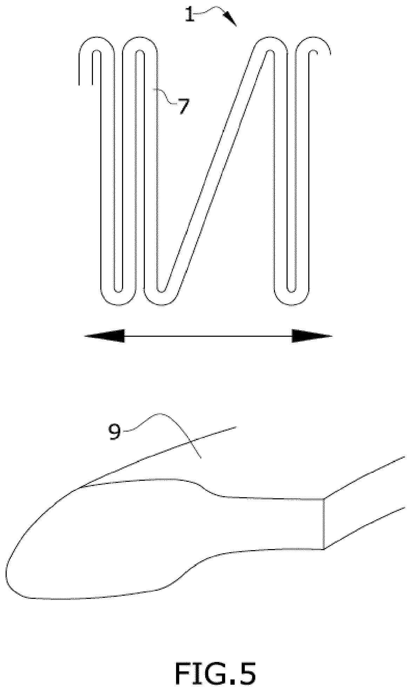

Other application is shown in figure 5 in which a leading edge (9) that comprises section changes is also covered by a resistive heater according to the invention in which the graphene paper (1) is cut with the shape of a ribbon (7) with a continuous serpentine shape comprising a varying distance between successive meanders. More specifically, figure 5 shows an embodiment in which the distance between two sucessive meanders is increased with respect to the distance between other successive meanders in order to overcome the step between different sections of the leading edge (9).

The graphene paper (1) object of the invention allows the application of heatable graphene layers for de-icing, anti-icing in which bleed air anti-icing or de-icing systems were used or even applications in which it was impossible to include anti-icing or de-icing devices due to the curvature of the components or the fact that they were composite components.

In an specific embodiment, the protective layer (3) may comprise a polymer film, for instance an adhesive thermoset, epoxy or thermoplastic resin, PAEK, PEEK, PEKK, PPS, PEI, PA. The thickness may be 0.05 - 0.5 mm.

In another specific embodiment, the insulating layer (4) may comprise a glass fiber reinforced plastic prepeg (GFRP) or a polymer film, for instance an adhesive thermoset, epoxy, or thermoplastic, PAEK, PEEK, PEKK, PPS, PEI, PA. The thickness may be 0.05 - 0.5 mm, for instance:
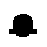 Glass fiber epoxy fabric prepreg thickness: 0.1 mm, AW: 105 g/m2
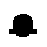 Glass fiber fabric prepreg thickness: 0.066 mm, AW: 48 g/m2
• Adhesive epoxy film thickness: 0.25 mm, AW: 250 g/m2
• Adhesive epoxy film thickness: 0.13 mm, AW: 150 g/m2

The fiber reinforced polymer surface (5) may be a thermoset or thermoplastic carbon fiber reinforced polymer, for instance, a carbon fiber tape prepreg, with epoxy or thermoplastic resin. Additionally, it can be also a carbon fiber dry textile and infusion epoxy resin.

The resistive heater shall be free of defects from manufacturing, shaping or cutting, assembly operations to ensure appropriate performance.

Additionally, the graphene paper (1) of the invention needs to be divided into different modules or cells connected in parallel for application in aircraft structure, in order to ensure the safe functionality of the system. In case of failure of one graphene module, the others will continue to be operative, which preserves the integrity of the system and the part.

Joining the fiber reinforced polymer component and the graphene paper (1), with its different layers (3, 4), is performed by co-curing or co-consolidation or co-joining or secondary joining processes.

A co-curing cycle is used when the fiber reinforced polymer component and the additional layers (3, 4, 6) are made of thermoset polymers, a co-consolidation cycle is used when the fiber reinforced polymer component and the additional layers (3, 4, 6) are made of thermoplastic polymers.

The following embodiments are herewith provided but other embodiments are possible.

### Co-curing or co-consolidation

All layers are fresh and cured or consolidated in the same curing cycle and the following method steps are followed:
- Integration of the graphene paper (1) in-between two fresh layers, the protective layer (3) and the insulating layer (4) if needed,
- A first curing or consolidation cycle is applied curing the fiber reinforced polymer component, that is made of thermoset polymer, plus all the additional layers that are employed: the graphene paper (1) and the protective layer (3) and, if needed, the insulating layer (4) and, if needed, the anti-erosion layer (6) or consolidating the fiber reinforced polymer component, that is made of thermoplastic polymer, plus all the additional layers that are employed: the graphene paper (1) and the protective layer (3) and, if needed, the insulating layer (4) and, if needed, the anti-erosion layer (6).
- Optionally, the anti-erosion layer (6) may be applied/joined in a second curing cycle (with adhesive layer / paste, sealant...).

### Co-joining

- Integration of the graphene paper (1) in-between two fresh layers, the protective layer (3) and the insulating layer (4) if needed.
- A first curing or consolidation cycle is applied, curing or consolidating the fiber reinforced polymer component, that can be made of thermoset or thermoplastic polymer.
- A second curing or consolidation cycle is applied, curing or consolidating the additional layers (3, 4, 6) and joining the graphene paper (1) and the protective layer (3) and the insulation layer (4), if needed, and the anti-erosion layer (6), also if needed, and the fiber reinforced polymer component.
- Optionally, the anti-erosion layer (6) may be applied in a third curing cycle (with adhesive layer / paste, sealant...)

### Secondary joinig

- Integration of the graphene paper (1) in-between two fresh layers, the protective layer (3) and the insulating layer (4), if needed.
- Performing a first curing or consolidation cycle, curing or consolidating the additional layers (3, 4, 6) and joining the graphene paper (1), the protective layer (3) and the insulating layer (4) and the anti-erosion layer (6), the last two layers (4, 6) if needed.
- Performing a second curing or consolidation cycle, curing or consolidating the fiber reinforced polymer component, that can be made of thermoset or thermoplastic polymer.
- Performing a third curing cycle to join the cured or consolidated fiber reinforced polymer component and the joined graphene paper (1), protective layer (3) and insulating layer (4), anti-erosion layer (6).

Additionally, when having an anti-erosion layer (6), the graphene sheet (1) may be firstly joined to the anti-erosion layer (6) and afterwards applied to the fiber reinforced polymer surface (5).

## Claims

1. Resistive heated aircraft component, comprising a fiber reinforced polymer surface (5), **characterised in that** it further comprises:
• a graphene paper (1) having first and second opposite faces,
• a pair of electrodes (2) connected to the graphene paper (1), the graphene paper (1) and the pair of electrodes (2) being configured to conduct an electrical current such that the graphene paper (1) produces heat,
• the second face of the graphene paper (1) located towards the fiber reinforced polymer surface (5) of the aircraft, and
• a protective layer (3) located on the first face of the graphene paper (1).

2. Resistive heated aircraft component, according to any preceding claim, wherein it comprises an insulating layer (4) located between the graphene paper (1) and the fiber reinforced polymer surface (5).

3. Resistive heated aircraft component, according to claim 2, wherein the insulating layer (4) comprises a polymer film.

4. Resistive heated aircraft component, according to claim 3, wherein the polymer film comprises an adhesive thermoset polymer or a thermoplastic polymer or a glass fiber reinforced polymer.

5. Resistive heated aircraft component, according to any preceding claim, wherein it comprises a thermally conductive anti-erosion layer (6) located over the protective layer (3).

6. Resistive heated aircraft component, according to claim 5, wherein the thermally conductive anti-erosion layer (6) comprises a thermally conductive polyurethane or metallic foil.

7. Resistive heated aircraft component, according to any preceding claim, wherein the graphene paper (1) comprises a ribbon (7) having a continuous serpentine shape, spiral shape, mesh shape or straight lines shape.

8. Resistive heated aircraft component, according to claim 7, wherein the width of the ribbon (7) ranges from 2 mm to 100 mm.

9. Ice protection system for an aircraft, **characterised in that** it comprises a resistive heated aircraft component according to any preceding claim.

10. Aircraft, comprising a resistive heated aircraft component according to any preceding claim 1 to 8.

11. Method for manufacturing an aircraft component comprising a resistive heater, **characterised in that** the method comprises the following steps:
- providing a graphene paper (1) having first and second opposite faces,
- providing a pair of electrodes (2),
- connecting the pair of electrodes (2) to the graphene paper (1) so that the graphene paper (1) and the pair of electrodes (2) are configured to conduct an electrical current such that the graphene paper (1) produces heat,
- providing a protective layer (3),
- locating the protective layer (3) on the first face of the graphene paper (1),
- providing an aircraft component comprising a fiber reinforced polymer surface (5),
- joining the graphene paper (1) and the protective layer (3) to the fiber reinforced polymer surface (5), the second face of the graphene paper (1) located towards the fiber reinforced polymer surface (5).

12. Method for manufacturing an aircraft component, according to claim 11, wherein the step of joining the fiber reinforced polymer surface (5) and the graphene paper (1) is performed by co-curing or co-consolidation or co-joining or secondary joining.

13. Method for manufacturing an aircraft component, according to any preceding claim 11 or 12, wherein before the step of joining the graphene paper (1) to the fiber reinforced polymer surface (5), the method comprises a step of providing an insulating layer (4) located between the second face of the graphene paper (1) and the fiber reinforced polymer surface (5).

14. Method for manufacturing an aircraft component, according to any preceding claim 11 to 13, wherein it further comprises a step of providing an anti-erosion layer (6) located over the protective layer (3).

15. Method for manufacturing an aircraft component, according to any preceding claim 11 to 14, wherein the graphene layer (1) is cut in a ribbon (7) having a continuous serpentine shape, spiral shape, mesh shape or straight lines shape.
